Europäisches Patentamt

European Patent Office

Office européen des brevets

(19)

(11) **EP 1 350 436 B1**

(12) **FASCICULE DE BREVET EUROPEEN**

(45) Date de publication et mention
de la délivrance du brevet:
**04.05.2005 Bulletin 2005/18**

(51) Int Cl.$^7$: **A23L 1/236**, A23G 3/00,
A23G 3/30, A23L 1/09

(21) Numéro de dépôt: **03290731.3**

(22) Date de dépôt: **21.03.2003**

(54) **Composition liquide de maltitol, son procédé de fabrication et ses utilisations**

Zusammensetzung, Verfahren zur Herstellung und Verwendung von flüssigem Maltitol

Composition, production method and use of liquid maltitol

(84) Etats contractants désignés:
**AT BE BG CH CY CZ DE DK EE ES FI FR GB GR
HU IE IT LI LU MC NL PT RO SE SI SK TR**

(30) Priorité: **04.04.2002 FR 0204225**

(43) Date de publication de la demande:
**08.10.2003 Bulletin 2003/41**

(73) Titulaire: **Roquette Frères
62136 Lestrem (FR)**

(72) Inventeur: **Serpelloni, Michel
62660 Beuvry-les-Bethune (FR)**

(74) Mandataire: **Boulinguiez, Didier
Cabinet Plasseraud
65/67 rue de la Victoire
75440 Paris Cedex 09 (FR)**

(56) Documents cités:
**EP-A- 0 171 964          EP-A- 0 185 595
EP-A- 0 189 704          EP-A- 0 625 311
EP-A- 0 937 733          WO-A-87/02222**

## Description

La présente invention a pour objet l'utilisation d'une composition édulcorante liquide de maltitol dans une confiserie. Cette utilisation s'applique en général à la préparation de produits de confiseries entièrement cristallisés (tels que le givrage pour sucres cuits), semi-cristallisés (telles que les chewing-gums, les bubble-gums, les pâtes à mâcher, les massepains, les fondants, les caramels, les fudges, les lozenges, les nougats), ou non cristallisés (tels que la nougatine) et à celle des couches de dragéification dures et tendres, et, de façon préférée, aux chewing-gums et aux couches de dragéification dure.

La présente invention concerne encore, en tant que produits nouveaux, les confiseries obtenues de la sorte et la composition liquide de maltitol précitée.

On connaît différents sirops de maltitol utilisés couramment notamment en confiserie dite « sans sucre ».

Les sirops de maltitol disponibles commercialement sont fabriqués par hydrogénation catalytique d'hydrolysats d'amidon riches en maltose, et présentent généralement des richesses en maltitol de 50 à 89%.

Certains d'entre eux comprennent moins de 60% de maltitol et sont considérés comme pauvres en maltitol. Il s'agit notamment des sirops commercialisés sous les appellations LYCASIN® 80/55, POLYSORB®, HYSTAR®, MALTIDEX® 200. La composition en carbohydrates du LYCASIN® 80/55 en particulier est d'environ 6% de saccharides de DP1 (sorbitol), d'environ 52 % de disaccharides de DP2 (maltitol), d'environ 18% de DP3, 1,5% de DP4, 2% de DP5, 3,7% de DP6, 3,4% de DP7, 2,2% de DP8, 1,0% de DP9 et environ 11% de DP10 ou plus (DP : Degré de Polymérisation). De tels sirops peuvent également être mélangés avec de la glycérine pour une utilisation dans les chewing-gums, comme décrit dans les documents suivants : US-A-4,671,961 ; US-A-4,671,967 et US-A-4, 728,515. La glycérine a pour effet de limiter la dureté et le caractère cassant des tablettes de chewing-gum ainsi préparées.

Le document EP-A-171 964 décrit des sirops de maltitol ayant des propriétés édulcorantes et humectantes, comprenant 12 à 24% de sorbitol, 60 à 80% de maltitol et 8 à 16% de saccharides de DP3 et plus. Ces sirops peuvent être utilisés dans de nombreuses applications telles que la confiserie sans sucre, les aliments diététiques, les pâtes dentifrices et les bains de bouche.

D'autres sirops, à teneur plus élevée en maltitol, en contiennent de 60 à 77%. On peut citer par exemple les sirops MALTISORB® 75/75, MALTIDEX® 100, FINMALT® et MALBIT®. On peut également citer les sirops de type MALTISORB® 70/85 et MALTIDEX® 080 qui sont enrichis en maltitol jusqu'à une teneur d'environ 85%.

Le document JP-A-50 30703 décrit un procédé de fabrication de bonbons non collants aux dents, à l'aide d'un sirop de maltitol MALBIT® liquide, connu pour ne contenir que de 73% à 77% de maltitol.

On connaît également des sirops de maltitol préparés à partir de maltitol poudre, dissout dans l'eau jusqu'à une concentration maximale de 150 g/100 g d'eau. Ces sirops, décrits dans le document US-A-5,637,334 sont destinés à une utilisation dans le chewing-gum. Ils peuvent être préparés avec une concentration plus forte et à plus haute température, mais le risque de cristallisation en est augmenté.

Le document EP-A-185 595 dont la Demanderesse est titulaire décrit un procédé de préparation de sirops riches en maltitol. Les sirops obtenus présentent une teneur en maltitol jusqu'à 97,5%, moins de 5% de sorbitol et une teneur en maltotriitol comprise entre 2,5 et 13%.

Le document JP 2002-47174 décrit un procédé de dragéification mettant en oeuvre un sirop de maltitol de richesse supérieure à 90% comprenant moins de 3% de maltotriitol pour une teneur en polyols de DP3 d'environ 4%, utilisé conjointement à une base de suspension solide consistant en matières insolubles telles que le talc, le kaolin, le carbonate de calcium, le dioxyde de titane. Cette base de suspension est utilisée dans un rapport de 0,6 à 1,4 parties en poids par partie de sirop de maltitol, et constitue une amorce de cristallisation essentielle pour pouvoir obtenir une dragéification correcte. De plus, cette base de suspension confère blancheur et croustillance aux produits ainsi dragéifiés.

C'est après avoir identifié et analysé les défauts des compositions et des sirops de l'art antérieur, à la lumière des problèmes rencontrés par les confiseurs, que la Demanderesse s'est aperçue que l'on recherchait toujours à l'heure actuelle une composition édulcorante liquide susceptible d'être directement utilisable dans la fabrication de confiseries et répondant aux diverses exigences de la pratique, c'est-à-dire :

- possédant des propriétés plastifiantes et liantes nécessaires à la fabrication de certaines confiseries,
- n'apportant qu'une quantité mineure d'eau au produit auquel elle est destinée à être ajoutée,
- présentant des propriétés rhéologiques telles qu'elle soit commode à manipuler,
- étant de préparation aisée,
- stable en elle-même et apte à conférer aux produits auxquels elle est destinée à être incorporée, une stabilité suffisante à la conservation, notamment en rapport avec le phénomène de cristallisation qui conduit à une augmentation de la dureté desdits produits,
- présentant un pouvoir sucrant important, permettant de diminuer l'ajout d'édulcorant intense de synthèse.

Après de longues et fastidieuses recherches, la Demanderesse a trouvé que l'on pouvait réduire notablement les coûts de fabrication de certaines confiseries en substituant, dans ces confiseries, tout ou partie du maltitol poudre par une composition liquide de maltitol d'une richesse sélectionnée en maltitol et dans laquelle coexistent, outre le maltitol, d'autres polyols aptes à accélérer, ou à tout le moins ne pas freiner, les phénomènes de cristallisation, lorsqu'ils y sont présents dans des teneurs sélectionnées.

La présente invention concerne donc une composition liquide de maltitol, caractérisée par le fait qu'elle présente, les teneurs étant exprimées en poids par rapport à la matière sèche de la composition :

- une teneur de 94 à 98% de maltitol,

- une teneur de 0,2 à 3% de sorbitol,

- une teneur de 0,1 à 3% de maltotriitol et d'au moins un polyol de degré de polymérisation égal à 3 (DP 3) choisi dans le groupe constitué par le panitol, l'isomaltotriitol, l'isopanitol, ladite teneur répondant à l'inéquation (1) :

$$(R)= \frac{\text{teneur en maltotriitol}}{\text{teneur totale en polyols de DP3}} \times 100 < 10$$

- une matière sèche comprise entre 70 et 85%.

Selon un mode préféré de l'invention, la composition liquide de maltitol conforme à l'invention présente une matière sèche comprise entre 70 et 80%, sa teneur en maltitol est comprise entre 95 et 98%, sa teneur en sorbitol est comprise entre 0,6 et 2% et R < 8.

La. présente invention concerne également l'utilisation de la composition liquide de maltitol conforme à l'invention comme composition édulcorante ou comme agent de texture dans des produits destinés à être ingérés et en particulier les chewing-gums, les pâtes à mâcher, les massepains, la nougatine, les fondants, les caramels, les fudges, les nougats, les sucres cuits aérés et grainés (mints), les lozenges, les produits de givrage, les couches dragéifiées dures et tendres.

Il n'était pas évident qu'une telle composition liquide de maltitol puisse présenter l'ensemble des qualités requises pour façonner des confiseries, c'est-à-dire qui soient à la fois faciles à produire, stables, non cariogènes et de qualités organoleptiques excellentes.

En effet, bien que le maltitol ait énormément de similitudes avec le saccharose du point de vue des propriétés organoleptiques, physico-chimiques et fonctionnelles et que les comportements de ces deux produits en confiserie soient généralement considérés comme très voisins, il existe une propriété basique très différente entre les deux molécules : celle liée à leurs cinétiques de cristallisation. En d'autres termes, la Demanderesse s'est aperçue que dans le cas du maltitol, lorsqu'une cristallisation est induite par des nuclei, la cinétique de cristallisation est toujours difficile à contrôler, contrairement à celle du saccharose. C'est-à-dire que cette cinétique est, ou bien trop rapide, ou bien trop lente, ce qui génère d'énormes difficultés lors de la fabrication des confiseries, ainsi que des problèmes de stabilité de celles-ci au cours du temps.

De façon générale, dans le domaine de la cristallisation, il est connu que la présence d'impuretés, dans une solution aqueuse contenant la molécule que l'on cherche à cristalliser, influence la viscosité du milieu et nuit à la pureté du cristal par intégration au réseau, des lacunes et dislocations. En mobilisant les sites actifs, les impuretés diminuent de ce fait fortement la vitesse de cristallisation.

C'est la raison pour laquelle jusqu'à aujourd'hui, et pour ne citer que ce seul exemple, les confiseurs industriels qui souhaitaient dragéifier leurs produits avec un sirop de dragéification au maltitol, préparaient un tel sirop par dissolution dans l'eau, d'une poudre de maltitol cristallisé (dans laquelle les impuretés sont donc absentes), afin de s'affranchir de tous les aléas liés aux phénomènes de cristallisation mentionnés ci-dessus.

Contre tout attente, la Demanderesse a découvert, de façon surprenante et inattendue, que cet enseignement général sur l'influence des impuretés sur la vitesse de cristallisation ne s'appliquait pas au moins au cas du maltitol.

La Demanderesse a en effet trouvé que toutes les molécules autres que le maltitol ne jouent pas le même rôle vis-à-vis de la vitesse de cristallisation du maltitol et donc de la qualité de la cristallisation obtenue. Conformément à l'invention, il a ainsi été trouvé que le sorbitol, le maltotriitol, le panitol, l'isomaltotriitol et l'isopanitol n'avaient pas, au moins à certaines concentrations, la même influence sur la vitesse de cristallisation du maltitol.

La Demanderesse a donc trouvé un moyen très efficace pour parvenir à contrôler la vitesse de cristallisation du maltitol et a mis au point un procédé de contrôle de la vitesse et de la qualité de cristallisation du maltitol contenu dans une composition liquide de maltitol cristallisable ou une confiserie comme en particulier les chewing-gums et les couches de dragéification dure. Conformément à l'invention, il a été trouvé que certaines molécules qui étaient habituellement présentes dans les sirops de maltitol n'avaient que peu ou pas d'influence sur la vitesse de cristallisation du maltitol à certaines concentrations. Le sorbitol, le panitol, l'isopanitol, l'isomaltotriitol et le maltosyl-1,6 maltitol peuvent être classés dans cette catégorie. D'autres molécules ont par contre un effet défavorable sur la vitesse de cristallisation du maltitol à certaines concentrations, c'est le cas du maltotriitol.

Partant de ce constat surprenant, la Demanderesse a mis au point les nouvelles compositions liquides de maltitol décrites précédemment, qui sont particulièrement bien adaptées à la fabrication des confiseries mentionnées ci-dessus et notamment à celle des chewing-gums et des couches de dragéifications dures.

En ce qui concerne la préparation des compositions liquides de maltitol conformes à l'invention, on peut procéder sans que cela soit limitatif, selon l'une des méthodes décrites ci-après :

- on prépare tout d'abord une fraction comprenant un sirop constitué de 94 à 98% en poids sur sec de maltitol, et on ajoute à cette fraction du sorbitol et les polyols de DP3 dans des proportions choisies en chacun de ces différents constituants et de manière à ce que l'inéquation (1) soit vérifiée.

- On mélange dans les proportions correctes un sirop à haute teneur en maltose, du glucose, du panose, du maltotriose, de l'isopanose, de l'isomaltotriose puis on procède à l'hydrogénation de ce mélange, et à sa purification de manière connue en soi.

- On procède à la concentration d'un mélange, dans les proportions correctes, d'un sirop à haute teneur en maltitol obtenu par exemple selon le document EP-A-0 185 595 dont la Demanderesse est titulaire, ou encore de maltitol pulvérulent, partiellement ou totalement cristallin, et de sorbitol, maltotriitol, panitol, isomaltotriitol, isopanitol.

A titre indicatif, le maltotriose, le panose, l'isomaltotriose et l'isopanose peuvent être obtenus par action de pullulanases, néopullulanase et isopullulanase sur du pullulan.

En ce qui concerne la concentration en eau de la composition conforme à l'invention, on choisit de préférence une matière sèche telle que la composition soit sursaturée en maltitol et que ce dernier soit présent dans un état amorphe. C'est la raison pour laquelle la matière sèche de la composition selon l'invention est comprise entre 70 et 85%, de préférence entre 70 et 80%. A de telles matières sèches, la composition selon l'invention peut être maintenue à une température comprise entre 50 et 80°C sans qu'apparaissent des problèmes de coloration.

D'excellents résultats ont ainsi été obtenus, par exemple avec une composition liquide présentant une teneur en maltitol de 95%, une teneur en sorbitol de 0,9% et une teneur en polyols de DP3 de 2,82% avec R < 8 ou encore présentant une teneur en maltitol de 97,1%, une teneur en sorbitol de 1,1% et une teneur en polyols de DP3 de 1,5% avec R < 8.

Une telle composition selon l'invention trouve notamment tout son intérêt dans :

- des procédés de fabrication de confiseries comprenant une étape d'ajout d'un agent de charge sous forme de maltitol poudre, où tout ou partie dudit agent de charge peut être substitué par ladite composition,

- des procédés de fabrication de confiseries comprenant une étape d'ajout d'un agent de charge par mise en solution dans l'eau de maltitol poudre, où ladite étape peut être substituée en tout ou partie par une étape d'ajout d'une composition liquide conforme à l'invention.

Les confiseries pour lesquelles l'utilisation de la composition liquide de maltitol est grandement avantageuse pour faciliter leur fabrication et en diminuer le coût, tout en préservant leurs qualités organoleptiques, sont en particulier les chewing-gums et les couches de dragéification dure pour lesquels d'excellents résultats ont été obtenus.

L'invention a donc également pour objet un procédé de fabrication d'un chewing-gum ou d'un bubble-gum comprenant les étapes consistant à :

- préparer de 5 à 95% de gomme de base,

- préparer de 1 à 95% de maltitol poudre, de 0,5 à 50% d'un sirop de maltitol, et de 0 à 50% d'un sirop de sorbitol,

- préparer de 0 à 30% de glycérine,

- préparer de 0,1 à 10% d'un arôme, et de 0,001 à 1% d'un édulcorant intense

- mélanger la gomme de base, le maltitol poudre, le sirop de maltitol, l'arôme, l'édulcorant intense et éventuellement le sirop de sorbitol et la glycérine pour fabriquer le chewing-gum,

caractérisé par le fait que tout ou partie du, maltitol poudre est substituée par une composition liquide de maltitol conforme à l'invention.

Le sirop de maltitol traditionnel et le sirop de sorbitol utilisés peuvent être par exemple ceux commercialisés par la Demanderesse sous les dénominations, respectivement LYCASIN® 80/55 HDS et NEOSORB® 70/70.

Pour contrôler la teneur en eau du chewing-gum ou du bubble-gum, la substitution du maltitol poudre par la composition liquide de maltitol conforme à l'invention, peut s'accompagner d'une substitution de tout ou partie des édulcorants liquides (sirop de sorbitol, sirop de maltitol, glycérine) par la composition liquide de maltitol selon l'invention ou par l'utilisation d'édulcorants liquides plus concentrés ou anhydres.

Avantageusement, les chewing-gums ou bubble-gums selon l'invention comprennent de 1 à 40%, de préférence de 1 à 25% de la composition liquide de maltitol conforme à l'invention.

Les chewing-gums ainsi obtenus présentent d'excellentes propriétés tant du point de vue rhéologique qu'organoleptique ou en ce qui concerne leur conservation grâce à la bonne aptitude à la cristallisation, à la faible teneur en eau et aux propriétés organoleptiques de la composition conforme à l'invention.

Les chewing-gums conformes à l'invention peuvent être dragéifiées, selon un procédé de dragéification dure, en utilisant ladite composition comme il sera décrit plus en détail ci-après.

L'invention a encore pour objet un procédé de dragéification dure d'un produit, comprenant au moins une étape d'application d'un sirop de dragéification composé de maltitol et d'au moins un liant, caractérisé par le fait que tout ou partie du sirop de dragéification ou du liant est substituée par une composition liquide de maltitol conforme à l'invention, de manière à réduire la fragilité de la denrée comestible ainsi dragéifiée.

Au sens de l'invention, on entend par agent liant les composés tels que la gomme arabique, la gomme talha, la gélatine, les celluloses et amidons modifiés, les dextrines, les dextrines indigestibles, les maltodextrines et les maltodextrines branchées, seuls ou en mélange entre eux.

Selon un mode général de réalisation de l'invention, le procédé consiste à humidifier de façon homogène la surface des produits à dragéifier en mouvement dans une turbine de dragéification à l'aide de ladite composition liquide de maltitol.

Selon un mode préféré de réalisation de l'invention, on substitue au plus 60%, de préférence au plus 50% et plus préférentiellement encore au plus 40% du maltitol cristallisé contenu dans le sirop de dragéification par une composition liquide de maltitol conforme à l'invention.

Une variante du procédé selon l'invention consiste, éventuellement, à ajouter ensuite sous forme pulvérulente une quantité de poudre de maltitol de haute pureté, de préférence supérieure à 90% en poids, et plus préférentiellement encore supérieure à 95% en poids.

Après répartition de la poudre et éventuellement séchage de l'ensemble, un nouveau cycle humidification-apport de poudre peut être réalisé. Le procédé nécessite au moins une, mais de préférence au moins deux applications, sous forme pulvérulente, d'une poudre de maltitol de haute pureté. Ces applications peuvent être réalisées lors d'un même cycle ou bien lors de cycles différents sachant qu'un cycle est défini dans la présente invention comme ne comprenant qu'une seule application de la composition liquide de maltitol conforme à l'invention.

En d'autres termes, le procédé de dragéification conforme à l'invention peut comprendre au moins une étape de répartition d'une poudre de maltitol d'une pureté supérieure à 90%, de préférence supérieure à 95% en poids, lesdites étapes d'application et de répartition étant menées dans un ordre quelconque.

Bien que ce ne soit pas nécessaire pour obtenir des produits dragéifiés de qualité, on peut envisager d'ajouter au sirop de dragéification des matières insolubles telles que le talc, le kaolin, le carbonate de calcium, le sulfate de calcium, le dioxyde de titane.

Il est à noter que les produits à dragéifier peuvent éventuellement être gommés préalablement selon les techniques classiques connues de l'homme du métier. Et, bien entendu, il est possible de procéder finalement à un cirage classique en vue d'améliorer l'aspect des produits. On utilise dans ce cas par exemple des corps gras, des laques ou des cires.

Le procédé de dragéification conforme à l'invention permet d'enrober tous types de produits, comme notamment des produits alimentaires tels que des confiseries, chewing-gums, bubble-gums, comprimés, lozenges, articles gélifiés, pâtes à mâcher, bonbons durs, produits chocolatés, des fruits secs tels qu'amandes, noisettes, des produits pharmaceutiques ou vétérinaires comme les pilules, les tablettes ou comprimés, produits pour animaux, des produits diététiques tels que les granulés de plantes, des semences ou des graines, des poudres d'engrais agglomérées, des additifs à base d'enzymes ou de microorganismes comme les levures, des tablettes détergentes, des vitamines, des arômes, parfums, acides, édulcorants ou principes actifs divers.

La mise en oeuvre du procédé qui vient d'être décrit permet de manière simple d'obtenir des produits dragéifiés particulièrement résistants à la casse, avec des temps de dragéification particulièrement courts pour un taux de grossissage d'environ 30%.

L'invention sera mieux comprise à l'aide des exemples suivants qui se veulent illustratifs et non limitatifs.

EXEMPLE 1 : cristallisation

1. conditions des essais

Le sirop à cristalliser est concentré à 80% de matières sèches, placé dans un cristallisoir de laboratoire et stabilisé en température à 80°C, puis le cristallisoir est refroidi sous agitation lente à raison de 10°C par 24 heures.
Différentes bases sont préparées ayant la composition suivante :

| Base (%/sec) | Maltitol | Sorbitol | Polyols de DP3 | R |
|---|---|---|---|---|
| I1 | 97,1 | 1,1 | 1,5 | 6,67 |
| I2 | 96,9 | 2,9 | 0 | - |
| I3 | 96,5 | 0 | 3,3 | 0 |
| I4 | 95 | 0,9 | 2,8 | 6 |
| I5 | 94 | 1,3 | 3,9 | - |
| I6 | 95 | 0,9 | 2,9 | 11 |

2. Résultats

| Suivi MS des eaux-mères | | | | | | |
|---|---|---|---|---|---|---|
| T(°C) | I1 | I2 | I3 | I4 | I5 | I6 |
| 70 | 80,0 | 80,0 | 80,0 | 80,0 | 80,0 | 80,0 |
| 60 | 78,7 | 80,0 | 80,0 | 79,5 | 80,0 | 80,0 |
| 50 | 76,3 | 76,4 | 78,4 | 77,9 | 80,0 | 80,0 |

3. Conclusions

A teneur en maltitol voisine, les compositions conformes à l'invention I1 et I4 cristallisent rapidement à 60°C , alors qu'il faut descendre à 50°C pour que la composition I2 cristallise, puis la composition I3. Les compositions I5 et I6 n'ont pas cristallisé à 50°C.

EXEMPLE 2 : chewing-gum

Des compositions de chewing-gums sont préparées selon les formules suivantes :

| | Chewing-gum avec maltitol poudre | Chewing-gum selon l'invention |
|---|---|---|
| Gomme de base FLAMA T (CAFOSA) | 25.0 % | 25.0 % |
| Maltitol cristallisé MALTISORB® P 35 (99% maltitol/sec) | 60.5 % | 55.0% |
| Composition selon l'invention I1, 80%MS | - | 6.8 % |
| Sirop de maltitol LYCASIN® 80/55 (75%MS) (52% maltitol/sec) | 11.0 % | - |
| Sirop de maltitol LYCASIN® 80/55 HDS (85%MS) (52% maltitol/sec) | - | 9.7 % |
| Glycérine | 1.0 % | 1.0 % |
| Arôme fraise liquide (SILESIA 111/8304169) | 1.8 % | 1.8 % |
| Arôme fraise poudre (SILESIA 121/8108030) | 0.5 % | 0.5 % |
| Acide citrique monohydrate broyé | 0.2 % | 0.2 % |

(suite)

| | Chewing-gum avec maltitol poudre | Chewing-gum selon l'invention |
|---|---|---|
| | 100.0 % | 100.0 % |

La gomme de base fondue (placée une nuit dans une étuve à 50°C) est introduite dans un pétrin malaxeur possédant deux bras en Z et une double enveloppe maintenue à 45°C par circulation d'eau dans la double enveloppe. On ajoute 1/3 du maltitol cristallisé et la composition liquide de maltitol conforme à l'invention et on malaxe pendant 4 min.

On ajoute le LYCASIN® 80/55 et on malaxe 1 min. On ajoute 1/3 du maltitol cristallisé et la glycérine puis on malaxe 4 min. On ajoute 1/3 du maltitol cristallisé et on malaxe 4 min. On ajoute l'arôme fraise en poudre et l'acide citrique broyé et on malaxe 2 min. On ajoute l'arôme fraise liquide et on malaxe 1 min. On sort la pâte du pétrin. On la lamine et la découpe en bâtons de 5 mm d'épaisseur.

Les chewing-gums produits ont les caractéristiques suivantes

| | Chewing gum avec maltitol poudre | Chewing gum selon l'invention |
|---|---|---|
| Teneur en maltitol | 64.2 % | 64.0 % |
| Teneur en eau | 2.75 % | 2.81 % |
| Taux de substitution de maltitol cristallisé par matière sèche de composition liquide de maltitol selon l'invention | 0 % | 9% |
| Texture | Souple, liée, masticable | Souple, liée, masticable, identique à celle du chewing gum avec maltitol poudre |
| Goût | Excellent | Excellent, Identique à celui du chewing gum avec maltitol poudre |

EXEMPLE 3 : dragéification

Des chewing-gums sans sucre en forme de coussinets d'environ 1,95 cm de long pour environ 1,15 cm de large sont dragéifiés selon le procédé décrit dans le brevet EP-B1-0.625.311.

On utilise pour les dragéifications les sirops de dragéification à 72% de matières sèches et 70°C dont les matières sèches ont les compositions suivantes (Témoin à base de maltitol cristallisé. Essai 1: substitution totale de maltitol cristallisé par une composition liquide non conforme à l'invention. Essai 2 : substitution totale de maltitol cristallisé par une composition non conforme à l'invention, selon JP 2002-47174 (AMALTY®) présentant une teneur en maltitol de 95% sur sec et un rapport R = 2,9/3,9 * 100 = 74

Essai 3 : substitution totale de maltitol cristallisé par une composition liquide conforme à l'invention):

| | Témoin % sur sec | Essai 1 % sur sec | Essai 2 % sur sec | Essai 3 % sur sec |
|---|---|---|---|---|
| Maltitol cristallisé MALTISORB® P200 | 92.50 | - | - | - |
| Composition selon l'invention I4 | - | - | - | 99.50 |
| Composition non conforme à l'invention (93 % maltitol/sec) | - | 99.50 | - | - |

| | | | 99.5 | |
|---|---|---|---|---|
| Composition non conforme à l'invention, selon JP 2002-47174, sans base de suspension<br><br>(95% maltitol/sec et R = 74) | - | | | - |
| Solution de gomme arabique à 40 % MS | 7.00 | - | | - |
| TiO$_2$ | 0.50 | 0.50 | | 0.50 |
| | 100.00 | 100.00 | | 100.00 |

1.Essais et témoin

On place 50 Kg de centres à dragéifier dans une drageuse en rotation et on pulvérise le sirop de dragéification à 70°C à raison de 8 à 20 g par Kg de centres en début de dragéification et 22 à 26 g par Kg de centres en fin de dragéification. On saupoudre de 2 à 5 g de maltitol cristallisé MALTISORB® P 35 en début de dragéification (0 g/Kg de centres en fin de dragéification) et on laisse répartir 0,5 min à 1 min sans procéder à un séchage par flux d'air. Puis on sèche avec de l'air sec à 25-35°C pendant 3 à 5 min. On reproduit ces opérations jusqu'à obtention d'un rapport pondéral couche dragéifiée/centre = 35/65. On procède à un lissage a la cire de carnauba.

2.Résultat / Durée de dragéification

Témoin : pas de problèmes de dragéification; durée de dragéification = 4h16 min.
Essais 1 et 2 : gros problèmes de collage dus à une cristallisation trop lente. Dragéification non réalisable.
Essai 3 : Durée de dragéification = 3h50 min.

3. Test de casse des produits finis

Ce test consiste à faire chuter les chewing-gums dragéifiés d'une hauteur de 1 m sur un fond métallique et à dénombrer le pourcentage de coins cassés juste après dragéification ou après 3 jours de stockage.

| | Témoin | Essai 2 |
|---|---|---|
| Juste après dragéification | 1.5 % | 0% |
| Après 3 j de stockage | 24 % | 4 % |

La substitution totale de maltitol cristallisé par la composition conforme à l'invention augmente la résistance à la casse des couches dragéifiées.

EXEMPLE 4 : Dragéification

Des chewing-gums sans sucre en forme de coussinets d'environ 1,95 cm de long pour environ 1,15 cm de large sont dragéifiés selon le procédé décrit dans le brevet EP-B1-0.625.311.
On utilise pour les dragéifications des sirops de dragéification à 72% de matières sèches et 75°C dont les matières sèches ont les compositions suivantes ( Témoin à base de maltitol cristallisé. Essai : substitution de 50% de maltitol cristallisé par une composition liquide de maltitol conforme à l'invention) :

|  | Témoin (% sur sec) | Essai (% sur sec) |
|---|---|---|
| Maltitol cristallisé MALTISORB® P200 | 93,80 | 46,90 |
| Composition selon l'invention I4 | - | 46,90 |
| Solution de gomme arabique à 40 % MS | 5,00 | 5,00 |
| TiO$_2$ | 1,00 | 1,00 |
| Acesulfame K | 0,20 | 0,20 |
|  | 100 | 100 |

1.Essai et témoin

On place 50 Kg de centres à drageifier dans une drageuse en rotation et on pulvérise le sirop de drageification à 75°C à raison de 6 à 14 g par Kg de centres en début de drageification et 16 à 18 g par Kg de centres en fin de drageification. On saupoudre de 4 à 5 g de Maltitol cristallisé MALTISORB® P 35 en début de drageification (0 g / Kg de centres en fin de drageification) et on laisse répartir 0,5 min à 1 min sans procéder à un séchage par flux d'air. Puis on sèche avec de l'air sec à 23-28°C pendant 2,5 à 5 min. On reproduit ces opérations jusqu'à obtention d'un rapport pondéral couche drageifiée/centre = 35/65. On procède à un lissage a la cire de carnauba.

2.Durée de drageification

|  | Durée totale |
|---|---|
| Témoin | 4h 28 min |
| Essai | 4h 25 min |

La substitution partielle de maltitol cristallisé par une composition liquide de maltitol conforme à l'invention ne ralentit pas la vitesse de drageification.

3. Test de casse des produits finis

|  | Témoin | Essai |
|---|---|---|
| Juste après drageification | 14.5 % | 8% |
| Après 2 j de stockage | 13.5 % | 12 % |

La substitution partielle de maltitol cristallisé par la composition liquide de maltitol conforme à l'invention augmente la résistance à la casse des couches drageifiées.

EXEMPLE 5 : Fondant sans sucre

Des fondants sans sucre sont produits selon les recettes suivantes :

| | Témoin avec MALTISORB® cristallisé | | Essai selon l'invention | |
|---|---|---|---|---|
| | Composition mise en oeuvre (en poids) | Composition du produit fini (% en poids) | Composition mise en œuvre (en poids) | Composition du produit fini (% en poids) |
| Maltitol cristallisé MALTISORB® P200 | 526,4 | 60,3 | - | - |
| Composition I4 80 % MS | - | - | 692,6 | 63,2 |
| Sirop de sorbitol NEOSORB® 70/70 | 322,1 | 25,8 | 282,5 | 22,9 |
| Eau | 144,0 | - | 17,4 | - |
| Maltitol cristallisé MALTISORB® P35 (amorce) | 7,5 | 0,9 | 7,5 | 0,9 |
| Eau résiduelle | - | 13,0 | - | 13,0 |
| | 1000,00 | 100,00 | 1000,00 | 100,00 |

1.Mode opératoire (témoin et essai)

On cuit le mélange (maltitol MALTISORB® P200 ou composition selon l'invention) + eau + NEOSORB® 70/70 jusqu'à obtention d'une matière sèche de 85%. On bat sur mélangeur planétaire (à la vitesse maximale) jusqu'à ce que la température atteigne 47°C. Puis on ajoute l'amorce. Enfin on bat (vitesse maximum) durant 15 min.

2.Caractéristiques des produits obtenus

Le fondant témoin et le fondant dans lequel le MALTISORB® P200 a été substitué par la composition conforme à l'invention ont tous deux le même aspect, la même texture et le même goût. Le maltitol cristallise de la même manière dans le témoin et l'essai. Leurs teneurs en maltitol sont respectivement de 60,3 % pour le témoin et 60,0 % pour l'essai.

EXEMPLE 6 : Givrage de sucres cuits

Une solution témoin (A) de givrage est préparée en dissolvant 750 g de maltitol cristallisé MALTISORB® P200 dans 250 g eau et en portant cette solution à 110°C
Une solution (B) de givrage avec la composition conforme à l'invention est préparée en chauffant à 110°C la composition I1 conforme à l'invention (80 % M.S, 97,1 % maltitol sur sec, R = 6.67).

Des essais de givrage de sucres cuits avec la solution A ou la solution B sont réalisés selon le protocole suivant :

- Placer des sucres cuits fabriqués à partir de LYCASIN® HBC (sirop de maltitol vendu par la Demanderesse) dans une turbine de dragéification.
- Verser sur les sucres cuits en rotation dans la turbine 15 ml de solution de givrage (A ou B) à 110 °C par Kg de sucres cuits.
- Laisser le sirop de givrage (A ou B) se répartir et cristalliser à la surface des sucres cuits pendant 2 min. Puis saupoudrer avec du MALTISORB® P 200. Laisser les sucres cuits en rotation durant 15 min.
- Verser sur les sucres cuits en rotation dans la turbine 15 ml de solution de givrage (A ou B) à 110 °C par Kg de sucres cuits.
- Laisser le sirop de givrage (A ou B) se répartir et cristalliser à la surface des sucres cuits pendant 15 min.
- Attendre le refroidissement total des sucres cuits avant de les conditionner.

Les sucres cuits givrés à partir de la solution de givrage B ont un aspect et une stabilité comparables à ceux des sucres cuits givrés avec la solution A.

EXEMPLE 7 : Pâtes d'amandes sans sucre

Des pâtes d'amandes sans sucre sont produites selon les recettes suivantes (Témoin avec du maltitol cristallisé MALTISORB®. Essai avec la composition selon l'invention) :

|  | Composition mise en œuvre (en poids) | |
|---|---|---|
|  | Témoin | Essai |
| Maltitol cristallisé MALTISORB® P200 | 438.0 | 90.0 |
| Composition selon l'invention I1 80 % MS | - | 448.0 |
| Sirop de sorbitol NEOSORB® 70/70 | 268.0 | 253.1 |
| Eau | 90.0 | 4.9 |
| Poudre d'amandes | 171.5 | 171.5 |
| Maltitol cristallisé MALTISORB® P35 (amorce) | 2.5 | 2.5 |
| Glycérine | 30.0 | 30.0 |
|  | 1000,00 | 1000,0 |

Mode opératoire (témoin et essai)

On mélange le maltitol cristallisé ou la composition selon l'invention + le sirop de sorbitol + l'eau. On cuit ce mélange jusqu'à obtention d'une matière sèche de 88% (environ 120°C sous pression atmosphérique). Sous agitation, on ajoute la poudre d'amande. Lorsque la température atteint 50°C, on ajoute l'amorce et on mélange jusqu'à obtention d'un produit homogène. On incorpore la glycérine. On refroidit et met en forme.

Le goût et la texture de l'essai ne diffèrent pas de celui du témoin.

EXEMPLE 8 : Nougatine sans sucre

Des nougatines sans sucre sont produites selon les recettes suivantes :

| | Composition mise en œuvre (en poids) | |
|---|---|---|
| | Témoin avec MALTISORB[®] cristallisé | Essai conforme à l'invention |
| Maltitol cristallisé MALTISORB[®] P200 | 875 | - |
| Composition conforme à l'invention I1, 80 % MS | - | 897 |
| Amandes concassées | 125 | 103 |
| | 1 000 | 1 000 |

Mode opératoire (témoin et essai)

Sous agitation lente, on fond le maltitol cristallisé à 230°C ou on cuit la composition selon l'invention à 230°C. Au cours du refroidissement à 220°C, on ajoute les amandes. On coule sur marbre à 180°C. On refroidit, forme ou broye.

Le goût et la texture de l'essai ne diffèrent pas de celui du témoin

EXEMPLE 9 : sucres cuits aérés et grainés

Des sucres cuits aérés et grainés sont produits selon les recettes suivantes :

| | Composition mise en œuvre (en poids) | |
| --- | --- | --- |
| | Témoin avec MALTISORB® cristallisé | Essai conforme à l'invention |
| Maltitol cristallisé MALTISORB® P200 | 744 | – |
| Composition selon l'invention I1, 80% MS | – | 930 |
| | 19 | 19 |
| Maltitol cristallisé MALTISORB® P35 | 229 | 43 |
| Eau | 8 | 8 |
| Arôme menthe | | |
| | 1 000 | 1 000 |

Mode opératoire (témoin et essai)

On cuit le mélange MALTISORB® P200 / eau ou le mélange composition conforme à l'invention / eau à 195°C sous pression atmosphérique. On introduit cette masse cuite dans un mélangeur planétaire. On bat (vitesse maximale) jusqu'à ce que la température atteigne 140°C. On ajoute le MALTISORB® P30 et l'arôme menthe. On bat à la vitesse maximale. On étire la masse durant 5 min (250-300 révolutions du bras de l'étireuse). On forme. On place les produits obtenus à 80 % H.R. et 37°C pendant 72h.

Le goût, la texture et la vitesse de cristallisation de l'essai ne diffèrent pas de celui du témoin.

EXEMPLE 10 : lozenges sans sucre

Des lozenges sans sucre sont produits selon les recettes suivantes :

| | Composition mise en œuvre (en poids) | |
|---|---|---|
| | Témoin avec MALTISORB® cristallisé | Essai conforme à l'invention |
| Maltitol cristallisé MALTISORB® P200 | 1500 g | 1050,0 g |
| Composition selon l'invention I1, 80 % MS | - | 562,5 g |
| Solution de gélatine 170 blooms à 10 % MS | 150 g | - |
| Solution de gélatine 170 blooms à 40 % MS | - | 37,5 g |
| Arôme menthe | qs | qs |
| | 1 650,0 g | 1 650,0 g |

Mode opératoire (témoin et essai)

On introduit le maltitol cristallisé dans un pétrin à bras en Z préchauffé à 45°C. On ajoute la solution de gélatine, la composition selon l'invention et l'arôme. On mélange pendant environ 10 min jusqu'à l'obtention d'une pâte homogène. On vide le mélangeur. On lamine et estampe la pâte obtenue. On sèche les lozenges sans sucre obtenus durant 24 h à 45°C.

Le goût, la texture et la vitesse de cristallisation de l'essai ne diffèrent pas de celui du témoin.

**Revendications**

1. Composition liquide de maltitol, **caractérisée par le fait qu'**elle présente, les teneurs étant exprimées en poids par rapport à la matière sèche de la composition :

- une teneur de 94 à 98% de maltitol,

- une teneur de 0,2 à 3% de sorbitol,

- une teneur de 0,1 à 3% de maltotriitol et d'au moins un polyol de degré de polymérisation égal à 3 (DP3) choisi dans le groupe constitué par le panitol, l'isomaltotriitol, l'isopanitol, ladite teneur répondant à l'inéquation (1) :

$$(R) = \frac{\text{teneur en maltotriitol}}{\text{teneur totale en polyols de DP 3}} \times 100 < 10$$

- une matière sèche comprise entre 70 et 85%.

2. Composition selon la revendication 1, **caractérisée par le fait qu'**elle présente une matière sèche comprise entre 70 et 80%.

3. Composition selon la revendication 1 ou 2, **caractérisée par le fait que** R < 8.

4. Procédé de fabrication d'une composition liquide de maltitol conforme à l'une quelconque des revendications 1 à 3, **caractérisé par le fait que** l'on prépare tout d'abord une fraction comprenant un sirop constitué de 94 à 98% en poids sur sec de maltitol, que l'on ajoute à cette fraction du sorbitol et des polyols de DP 3 dans des proportions choisies en chacun de ces différents constituants et de manière à ce que l'inéquation (1) soit vérifiée, et que l'on ajuste la matière sèche de la composition ainsi obtenue à la valeur désirée.

5. Procédé de fabrication d'une confiserie comprenant une étape d'ajout d'un agent de charge sous forme de maltitol poudre, **caractérisé par le fait que** tout ou partie dudit agent de charge est substitué par une composition liquide conforme à l'une quelconque des revendications 1 à 3.

6. Procédé de fabrication d'une confiserie comprenant une étape d'ajout d'un agent de charge par mise en solution dans l'eau de maltitol poudre, **caractérisé par le fait que** ladite étape est substituée en tout ou partie par une étape d'ajout d'une composition liquide conforme à l'une quelconque des revendications 1 à 3.

7. Procédé selon la revendication 5 ou 6, **caractérisé par le fait que** la confiserie est de préférence un chewing-gum, un bubble-gum un sucre cuit grainé, un lozenge, de la nougatine, de la pâte d'amande, un fondant, une couche dragéifiée ou un givrage.

8. Confiserie susceptible d'être obtenue par la mise en oeuvre d'un procédé conforme à l'une quelconque des revendications 5 à 7.

9. Procédé de fabrication d'un chewing-gum comprenant les étapes consistant à :

- préparer de 5 à 95% de gomme de base,

- préparer de 1 à 95% de maltitol poudre, de 0,5 à 50% d'un sirop de maltitol, et de 0 à 50% d'un sirop de sorbitol,

- préparer de 0 à 30% de glycérine,

- préparer de 0,1 à 10% d'un arôme, et de 0,001 à 1% d'un édulcorant intense

- mélanger la gomme de base, le maltitol poudre, le sirop de maltitol, l'arôme, l'édulcorant intense et éventuellement le sirop de sorbitol et la glycérine pour fabriquer le chewing-gum,

   **caractérisé par le fait que** tout ou partie du maltitol poudre est substituée par une composition liquide de maltitol conforme à l'une quelconque des revendications 1 à 3.

10. Procédé selon la revendication 9, **caractérisé par le fait que** le chewing-gum obtenu comprend de 1 à 40%, de préférence de 1 à 25% d'une composition liquide de maltitol conforme à l'une quelconque des revendications 1 à 3.

11. Procédé selon la revendication 9 ou 10, **caractérisé par le fait qu'**il comprend en outre une étape de dragéification mettant en oeuvre une composition liquide de maltitol conforme à l'une quelconque des revendications 1 à 3.

12. Procédé selon la revendication 11, **caractérisé par le fait que** l'étape de dragéification est une étape de dragéification dure.

13. Procédé de dragéification dure d'un produit, comprenant au moins une étape d'application d'un sirop de dragéification composé de maltitol et d'au moins un liant, **caractérisé par le fait que** tout ou partie du sirop de dragéification ou du liant est substituée par une composition liquide de maltitol conforme à l'une quelconque des revendications 1 à 3, de manière à réduire la fragilité de la denrée comestible ainsi dragéifiée.

**14.** Procédé selon la revendication 13, dans lequel on substitue au plus 60%, de préférence au plus 50% et plus préférentiellement encore au plus 40% du maltitol cristallisé contenu dans le sirop de dragéification par une composition liquide de maltitol conforme à l'une quelconque des revendications 1 à 3.

**15.** Procédé selon l'une ou l'autre des revendications 13 et 14, **caractérisé par le fait qu'**il comprend en outre au moins une étape de répartition d'une poudre de maltitol d'une pureté supérieure à 90%, de préférence supérieure à 95% en poids, lesdites étapes d'application et de répartition étant menées dans un ordre quelconque.

**16.** Procédé selon l'une quelconque des revendications 13 à 15, **caractérisé par le fait que** ledit liant est choisi dans le groupe constitué par la gomme arabique, la gomme talha, la gélatine, les celluloses et amidons modifiés, les dextrines, les dextrines indigestibles, les maltodextrines et les maltodextrines branchées, seuls ou en mélange entre eux.

**17.** Application de la composition liquide de maltitol conforme à l'une quelconque des revendications 1 à 3 comme composition édulcorante ou comme agent de texture dans des produits destinés à être ingérés par les hommes ou les animaux.

**Patentansprüche**

**1.** Flüssige Maltitolzusammensetzung, **dadurch gekennzeichnet, dass** sie folgende Gehalte aufweist, die in Gewicht, bezogen auf die Trockenmasse der Zusammensetzung, ausgedrückt sind:

- einen Maltitolgehalt von 94 bis 98 %,
- einen Sorbitgehalt von 0,2 bis 3 %,
- einen Gehalt von 0,1 bis 3 % Maltotriitol und mindestens eines Polyols mit einem Polymerisationsgrad gleich 3 (DP 3), das aus der Gruppe ausgewählt ist, die aus Panitol, Isomaltotriitol, Isopanitol besteht, wobei dieser Gehalt die Ungleichung (1) erfüllt:

$$(R) = \frac{\text{Maltotriitolgehalt}}{\text{Gesamtgehalt an Polyolen mit DP 3}} \times 100 < 10$$

- eine Trockenmasse zwischen 70 und 85 %.

**2.** Zusammensetzung nach Anspruch 1, **dadurch gekennzeichnet, dass** sie eine Trockenmasse zwischen 70 und 80 % aufweist.

**3.** Zusammensetzung nach Anspruch 1 oder 2, **dadurch gekennzeichnet, dass** R < 8.

**4.** Verfahren zur Herstellung einer flüssigen Maltitolzusammensetzung nach einem der Ansprüche 1 bis 3, **dadurch gekennzeichnet, dass** man zunächst eine Fraktion herstellt, die einen Sirup umfasst, der aus 94 bis 98 Trockengew.-% Maltitol besteht, dass man dieser Fraktion Sorbit und Polyole mit DP 3 in Anteilen zusetzt, die für jeden dieser verschiedenen Bestandteile und so gewählt werden, dass die Ungleichung (1) erfüllt wird, und dass man die Trockenmasse der auf diese Weise erhaltenen Zusammensetzung auf den gewünschten Wert einstellt.

**5.** Verfahren zur Herstellung eines Süßwarenartikels, das einen Schritt des Zusetzens eines Füllmittels in Form von Maltitolpulver umfasst, **dadurch gekennzeichnet, dass** das Füllmittel ganz oder teilweise durch eine flüssige Zusammensetzung nach einem der Ansprüche 1 bis 3 ersetzt wird.

**6.** Verfahren zur Herstellung eines Süßwarenartikels, das einen Schritt des Zusetzens eines Füllmittels durch Lösen von Maltitolpulver in Wasser umfasst, **dadurch gekennzeichnet, dass** dieser Schritt ganz oder teilweise durch einen Schritt des Zusetzens einer flüssigen Zusammensetzung nach einem der Ansprüche 1 bis 3 ersetzt wird.

**7.** Verfahren nach Anspruch 5 oder 6, **dadurch gekennzeichnet, dass** der Süßwarenartikel vorzugsweise Kaugummi, Bubblegum, gekörntes Bonbon, eine Pastille, Krokant, Marzipan, Fondant, eine dragierte Schicht oder eine Glacierung ist.

**8.** Süßwarenartikel, der mit Hilfe eines Verfahrens nach einem der Ansprüche 5 bis 7 erhältlich ist.

**9.** Verfahren zur Herstellung von Kaugummi, umfassend die Schritte, die darin bestehen, dass

- man 5 bis 95 % Basisgummi herstellt,
- 1 bis 95 % Maltitolpulver, 0,5 bis 50 % Maltitolsirup und 0 bis 50 % Sorbitsirup herstellt,
- 0 bis 30 % Glycerin herstellt,
- 0,1 bis 10 % Aroma und 0,001 bis 1 % eines starken Süßungsmittels herstellt,
- den Basisgummi, das Maltitolpulver, den Maltitolsirup, das Aroma, das starke Süßungsmittel und ggf. den Sorbitsirup und das Glycerin mischt, um Kaugummi herzustellen, **dadurch gekennzeichnet, dass** das Maltitolpulver ganz oder teilweise durch eine flüssige Maltitolzusammensetzung nach einem der Ansprüche 1 bis 3 ersetzt wird.

**10.** Verfahren nach Anspruch 9, **dadurch gekennzeichnet, dass** der erhaltene Kaugummi 1 bis 40 %, vorzugsweise 1 bis 25 % einer flüssigen Maltitolzusammensetzung nach einem der Ansprüche 1 bis 3 enthält.

**11.** Verfahren nach Anspruch 9 oder 10, **dadurch gekennzeichnet, dass** es außerdem einen Dragierungsschritt unter Verwendung einer flüssigen Maltitolzusammensetzung nach einem der Ansprüche 1 bis 3 umfasst.

**12.** Verfahren nach Anspruch 11, **dadurch gekennzeichnet, dass** der Dragierungsschritt ein Hartdragierungsschritt ist.

**13.** Verfahren zur Hartdragierung eines Produkts, das mindestens einen Schritt des Aufbringens eines Dragierungssirups umfasst, der aus Maltitol und mindestens einem Bindemittel besteht, **dadurch gekennzeichnet, dass** der Dragierungssirup oder das Bindemittel ganz oder teilweise durch eine flüssige Maltitolzusammensetzung nach einem der Ansprüche 1 bis 3 ersetzt wird, so dass die Brüchigkeit des auf diese Weise dragierten Nahrungsmittels verringert wird.

**14.** Verfahren nach Anspruch 13, bei dem man höchstens 60 %, vorzugsweise höchstens 50 % und noch bevorzugter höchstens 40 % des im Dragierungssirup enthaltenen kristallisierten Maltitols durch eine flüssige Maltitolzusammensetzung nach einem der Ansprüche 1 bis 3 ersetzt.

**15.** Verfahren nach einem der Ansprüche 13 und 14, **dadurch gekennzeichnet, dass** es außerdem mindestens einen Schritt der Verteilung eines Maltitolpulvers mit einer Reinheit von mehr als 90 Gew.-%, vorzugsweise mehr als 95 Gew.-% umfasst, wobei die Schritte des Aufbringens und des Verteilens in einer beliebigen Reihenfolge durchgeführt werden.

**16.** Verfahren nach einem der Ansprüche 13 bis 15, **dadurch gekennzeichnet, dass** das Bindemittel aus der Gruppe ausgewählt ist, die aus Gummi Arabicum, Talhagummi, Gelatine, Cellulosen und modifizierten Stärken, Dextrinen, unverdaulichen Dextrinen, Maltodextrinen und verzweigten Maltodextrinen, allein oder in gegenseitiger Mischung besteht.

**17.** Verwendung der flüssigen Maltitolzusammensetzung nach einem der Ansprüche 1 bis 3 als Süßungszusammensetzung oder als Texturmittel in Produkten für die Ernährung von Menschen oder Tieren.

## Claims

**1.** A liquid maltitol composition, comprising:

- a maltitol content of 94 to 98%,
- a sorbitol content of 0.2 to 3%,
- a maltotriitol content of 0.1 to 3% and of at least one polyol having a degree of polymerisation equal to 3 (DP3) selected from the group consisting of panitol, isomaltotriitol, isopanitol, the said content corresponding to the inequation (1):

$$(R) = \frac{\text{content of maltotriitol}}{\text{total content of DP3 polyols}} \times 100 < 10$$

- a dry matter content of between 70 and 85%, the contents being expressed by weight relative to the dry matter content of the composition.

2. The composition according to Claim 1, having a dry matter content of between 70 and 80%.

3. The composition according to Claim 1, wherein R < 8.

4. A process for manufacturing a liquid maltitol composition according to any one of claims 1 to 3, comprising firstly the preparation of a fraction comprising a syrup consisting of 94 to 98% by weight, on a dry basis, of maltitol and the addition in said fraction of both sorbitol and DP3 polyols in chosen proportions for each of the components that verified the inequation (1), and adjusting the dry matter content of the composition thus obtained to the desired value.

5. A process for manufacturing a confectionery product comprising a step of adding a filler in the form of powdered maltitol, wherein all or some of the said filler is replaced with a liquid composition according to any one of Claims 1 to 3.

6. A process for manufacturing a confectionery product comprising a step of adding a filler by dissolving powdered maltitol in water, wherein the said step is replaced completely or partly by a step of adding a liquid composition according to any one of Claims 1 to 3.

7. The process according to any one of Claims 5 to 6, wherein the confectionery product is preferably a chewing gum, a bubble gum, a grained boiled sweet, a lozenge, nougatine, almond paste, a fondant, a coated layer or a frosting.

8. A confectionery product obtained by the process according to any one of Claims 5 to 7.

9. A process for manufacturing a chewing gum comprising the steps consisting in:

   - preparing from 5 to 95% of basic gum,
   - preparing from 1 to 95% of powdered maltitol, from 0.5 to 50% of a maltitol syrup, and from 0 to 50% of a sorbitol syrup,
   - preparing from 0 to 30% of glycerol,
   - preparing from 0.1 to 10% of a flavouring, and from 0.001 to 1% of an intense sweetener,
   - mixing the base gum, the powdered maltitol, the maltitol syrup, the flavouring, the intense sweetener and optionally the sorbitol syrup and the glycerol in order to manufacture the chewing gum,

   **characterized in that** all or some of the powdered maltitol is replaced by a liquid maltitol composition according to any one of Claims 1 to 3.

10. The process of Claim 9, wherein the chewing gum obtained comprises from 1 to 40%, preferably from 1 to 25%, of a liquid maltitol composition according to any one of Claims 1 to 3.

11. The process according to any one of Claims 9 to 10, comprising furthermore, a coating step using a liquid maltitol composition according to any one of Claims 1 to 3.

12. The process of Claim 11, **characterized in that** the coating step is a hard coating step.

13. A process for the hard coating of a product, comprising at least one step of applying a coating syrup composed of maltitol and at least one binder, **characterized in that** all or some of the coating syrup or of the binder is replaced by a liquid maltitol composition in accordance with any one of Claims 1 to 3, so as to reduce the brittleness of the edible food thus coated.

14. The process of Claim 13, wherein not more than 60%, preferably not more than 50%, and even more preferentially not more than 40% of the crystallized maltitol contained in the coating syrup is substituted by a liquid maltitol composition according to any one of Claims 1 to 3.

15. The process according to any one of Claims 13 to 14, comprising furthermore at least one step for distributing a maltitol powder having a purity greater than 90%, preferably greater than 95% by weight, the said application and distribution steps being carried out in any order.

16. The process according to any one of Claims 13 to 15, wherein the said binder is chosen from the group consisting of gum arabic, gum talha, gelatin, modified starches and celluloses, dextrins, indigestible dextrins, maltodextrins and branched maltodextrins, alone or as a mixture with each other.

17. Use of the liquid maltitol composition according to any one of Claims 1 to 3, as a sweetening composition or as a texturing agent in products intended to be ingested by human or animals.